**Europäisches Patentamt**

**European Patent Office**

**Office européen des brevets**

(11) Publication number: **0 028 769**

**B1**

(12) **EUROPEAN PATENT SPECIFICATION**

(45) Date of publication of patent specification: **07.01.87**

(21) Application number: **80106645.7**

(22) Date of filing: **29.10.80**

(51) Int. Cl.⁴: **B 60 K 17/14**

(54) **Power drive system for road vehicles.**

(30) Priority: **09.11.79 IT 2718579**

(43) Date of publication of application:
**20.05.81 Bulletin 81/20**

(45) Publication of the grant of the patent:
**07.01.87 Bulletin 87/02**

(84) Designated Contracting States:
**AT CH DE FR GB LI NL**

(56) References cited:
**DE-A-2 133 485**
**SE-C- 149 812**
**US-A-2 754 015**
**US-A-3 447 619**
**US-A-3 612 202**
**US-A-3 869 013**
**US-A-3 913 697**
**US-A-3 994 353**

(73) Proprietor: **MAURI E C. DI MAURI AMBROGIO E ZORLONI COSTANZA E C. -S.A.S.**
**Via Caravaggio, 24**
**I-20033 Desio (Milan) (IT)**

(72) Inventor: **Mauri, Ambrogio**
**Via Garibaldi, 254**
**I-20033 Desio Milano (IT)**

(74) Representative: **Modiano, Guido et al**
**MODIANO & ASSOCIATI S.A.S. Via Meravigli, 16**
**I-20123 Milan (IT)**

Courier Press, Leamington Spa, England.

## Description

This invention relates to a drive system for road vehicles, in particular public transportation and semitrailer vehicles.

Several hydrodynamic or oil-operated drive systems are currently known and marketed, all such systems being referred to hereinafter as "hydraulic drive systems", as known are advantages afforded thereby. For transmitting motive power on transportation vehicles, such hydraulic drive systems have gained acceptance mainly on account of their inherent ability to provide a continuously variable drive ratio and independent control of the speed and torque delivered to each driving wheel. To accomplish the former goal, hydraulically operated units have been developed for installation in lieu of the clutch/transmission assembly employed in traditional drives. The latter goal is instead achieved by providing a pump to feed a number of hydraulic motors, each motor being coupled to one wheel of the vehicle.

While the former system is mainly directed to making the driving of the vehicle more convenient, as an alternative to fully automated transmissions, the latter has substantial advantages from the standpoint of engineering and economy, and is generally preferred for industrial vehicles. Moreover, the latter system affords the additional advantage of eliminating the need for differential gears and driveshafts, such that, at least in principle, it may be reduced to but one pump and two or four hydraulic motors.

However, traditional power drive systems have been definitely improved through the years, especially as relates to automatic transmissions and differential gears. Thus, the technical problem arises of investigating whether novel and particularly advantageous combinations may be found of hydraulic drive units and mechanical drive units. SE—C—149812 describes a power drive system for road vehicles, as defined in the precharacterizing part of claim 1.

The problem of the invention is to control the road vehicle operated by two different types of energy source in part by the driver and in part automatically depending on the running condition of the vehicle.

More specifically, the invention is directed to providing a drive system which is particularly suitable for application to public transportation vehicles, especially vehicles of the semitrailer type.

The above problem is solved by the invention as defined in the characterizing part of claim 1.

The features and advantages of the invention will be detailed hereinafter through a description of a presently preferred embodiment thereof, with reference to the accompanying drawing, where:

Figure 1 is a hydraulic diagram of the drive system according to the invention;

Figure 2 shows a drive system, as illustrated diagrammatically in Figure 1, as installed on the frame of a public transportation vehicle of the semitrailer type, of which vehicle frame only the rear portion and part of the front portion are shown; and

Figure 3 is a function and hydraulic diagram of the inventive system.

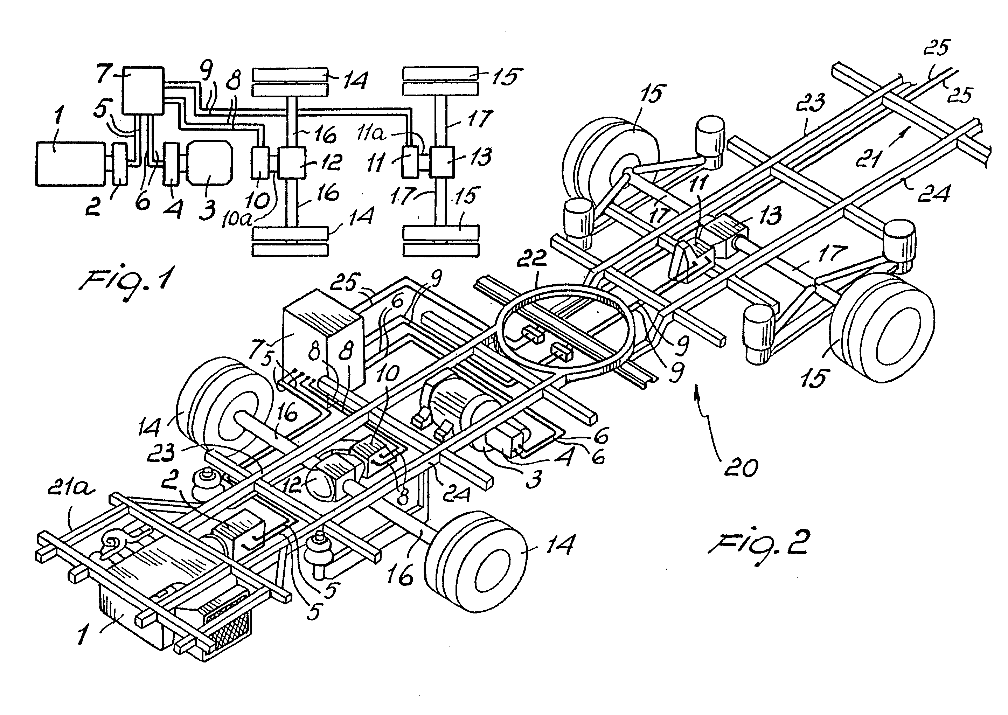

With particular reference to Figure 1, the drive system according to the invention provides in essence, and particularly for a vehicle having two drive axles, a prime motor 1, such as an internal combustion engine, driving a hydraulic pump 2. In parallel therewith, there is provided an electric primary motor 3, preferably of the constant speed type, which drives, in turn, a hydraulic pump 4 of its own, identical to the pump 2. The two pumps, 2 and 4, are respectively connected, through dual, delivery and return, first lines or ducts 5 and second lines or ducts 6, to a distributor valve unit 7 feeding in parallel, through third lines 8 and fourth lines 9, also of the dual type, respectively the two hydraulic motors 10 and 11. Such hydraulic motors are each mounted on a differential gear 12 and 13, respectively, which rotatively drive pairs of driving wheel sets, 14 and 15, through axle shafts 16 and 17.

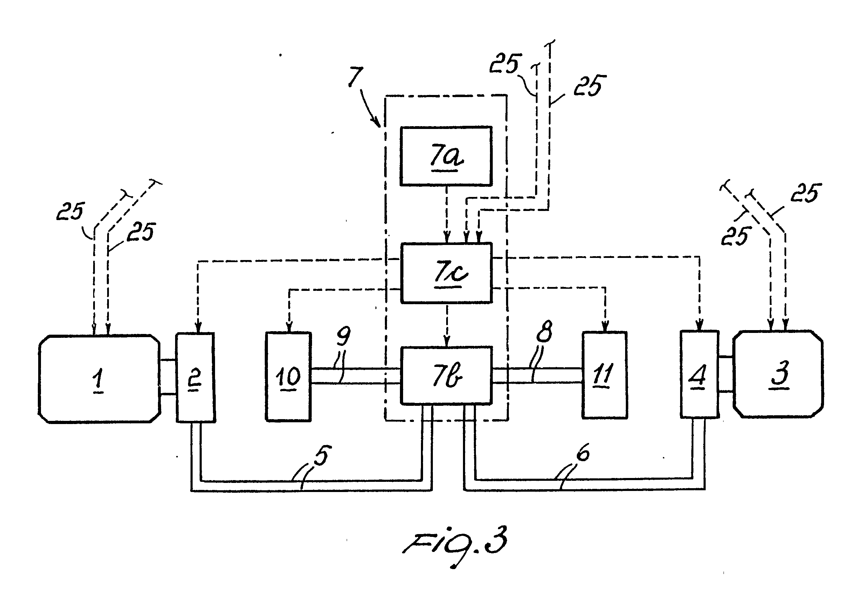

Figure 2 illustrates, in a topographic and schematic manner, the arrangement and location of a hydraulic drive system, in accordance with the layout diagram of Figure 1, across the frame of a public transportation vehicle of the semitrailer type which has two driving axles and includes an internal combustion engine type of prime motor, e.g., a diesel engine, for self-propulsion, and a primary electric motor for operation as a trolleybus or tramcar. Corresponding parts in Figures 1 and 2 are designated with the same reference numerals.

The semitrailer vehicle of Figure 2 is generally indicated at 20. Reference has been made, for illustrative purposes only, to a three-axle type of semitrailer vehicle, of which only the two rear axles are shown in the figure. There may be seen a load bearing or main frame 21 comprising two sections articulated to each other by a rotary ring or plate or "fifth wheel" 22, known *per se*, e.g. as manufactured and sold by Schenk of Stuttgart, West Germany. The rear section or portion mounts the prime motor 1 and primary motor 3: in particular, a latticework structure 21a accommodates an internal combustion engine constituting the prime motor 1, whilst between the fifth wheel 22 and the driving wheel sets 14 there is accommodated the electric primary motor 3. The front portion of the frame, mounting the steering wheels, is not shown in the drawing and may be set up in a manner known *per se*.

The motors 1 and 3, hydraulic pumps, and hydraulic motors, are all located between two parallel side spars 23 and 24, which extend from the fifth wheel 22 both towards the front section and rear semi-trailer, wherefor they form the supporting framing, in a quite conventional manner. The passenger-carrying coach is positioned on both frame sections or portions.

The hydraulic motors 10 and 11 are mounted directly over the differential gears 12 and 13, and are swingable therewith.

As shown in Figure 2, connections 25 are led to the valve unit 7, as well as to the prime motor 1 and primary motor 3, which interconnect these elements with thethrottle and brake controls at the driver's station. The unit 7 controls the liquid flow being circulated, both for starting and braking purposes, by acting on the hydraulic pumps 2, 4, and on the hydraulic motors 10, 11. Moreover, the unit 7 includes a change-over device, known *per se*, which is operative to prevent the simultaneous actuation of the motors 1 and 3. More specifically, the unit 7 is only ideally, for convenience of illustration, a unitary construction. In actual practice, the various elements which concur to the functions of the unit 7 may be scattered throughout the vehicle structure, while remaining operatively interconnected. In essence, besides the cited changeover device, such elements may be divided into: electric control devices 7a, solenoid valves 7b, and electric control devices 7c.

The electric control devices 7a may be, for example, sensors adapted for detecting the vehicle travel condition parameters (e.g. the wheel rpm's, the rpm's of the prime motor when in operation, the road gradient, the oil pressure and temperature, etc., in the various circuits).

The solenoid valves 7b, known *per se*, are arranged along the oil lines wherethrough the hydraulic oil or fluid is circulated by the hydraulic pumps 2 and 4, and are provided with a plurality of operative positions. Thus, it becomes possible, in a manner known *per se* and by operating said solenoid valves, to shut off either the inoperative pump 2 or 4, and perform other operations relating to the control of the vehicle run. For example, the flow of oil or the like fluid to the hydraulic motors 10 or 11 can be shut off, or the oil be caused to flow through closed circuits located either at the hydraulic motors 10 and 11, and hydraulic pumps 2 or 4. Thus, the vehicle can be rapidly braked or the drive system set to neutral. In normal running conditions, said solenoid valves direct the oil or the like fluid from one of the hydraulic pumps 2 or 4 to the hydraulic motors 10 and 11.

The electric control devices 7c receive signals from both said electric control devices 7a and the controls (actually, the throttle and brake pedal controls) located at the driver's station. The signals are processed, e.g. by means of electronic cards, and so converted as to control both the positions of the solenoid valves 7b and the flow rates of the hydraulic pumps 2 or 4 and hydraulic motors 10 and 11. In fact, the system according to this invention may include advantageously hydraulic motors 10 and 11 and hydraulic pumps 2 or 4 of the variable volume type, that is wherein the rpm's and flow rate (at constant rpm's) can be changed independently.

The net result is that, whereas the rpm's of the pumps 2 or 4 and motors 10 and 11 are respectively dictated by the rpm's of the prime motor 1 and primary motor 3, which are directly controlled by the driver and the amount of oil being circulated through the lines 8 and 9, the flow rate or volume of said pumps and motors is controlled by the electric control devices, both in accordance with the driver's own decisions and of the running conditions detected by the electric control devices 7a.

Figure 3 illustrates the operation of the drive system as described hereinabove, the unit 7 being subdivided into said portions 7a, 7b, 7c, there being shown in addition to the hydraulic diagram already shown in Figure 1, also mutual interactions, as indicated in dotted lines, between the various members.

In practice, the road vehicle is jointly placed under control by the driver, who will control the prime motor 1 and primary motor 3 directly, and by the unit 7 which will control the power delivered to the differentials 12 and 13 in accordance with the running conditions of the vehicle and the driver's decisions.

By way of example, and in order to show how the invention can be implemented by utilizing readily available means, the internal combustion engine prime motor 1 may be a Magirus-Deutz V-8 diesel engine of 256 HP, while the primary electric motor 3 may be a Marelli motor developing 190 KW at 2600 rpm's and the hydraulic pumps 2 or 4 may be of the Linde BPV 100 model type, while the hydraulic motors 10 or 11 may be of the Linde BMV 105 model type, the vehicle frame may be a Fiat 470 main frame, and the differentials 12 or 13 may be a Fiat differential gear with a 1:12 gear ratio.

The advantages afforded by this drive system may be summarized as follows.

The fact should be considered first that the problems inherent to the drive train ending with the drive axles are effectively solved without involving any alteration of readily available and proven assemblies. This is particularly important for semitrailer vehicles, where the driveshafts pose serious installation and operation problems, owing to the long distances, sharp bends, and likelihood of vibration involved.

Another advantage is that in the drive system of this invention, it is easy to optimize the distribution of the torque to the axles, the differences among such torques being relatively small. The torque distribution between the inside and outside wheels in a bend is instead practically accomplished through the differential gear, where the rpm's are dictated by the steering radius rather than by the torque, which instead adjusts itself to the demand.

Therefore, the invention achieves a maximum in economy optimization, while leaving unaffected the behaviour of the vehicle in a bend. Finally, with the electric motor operating at a constant speed, no pick up power need be applied at each start in the case of the trolleybus application. Accordingly, the power requirements on the mains can be reduced drastically.

By way of example, a single embodiment has been described, but the invention is not limited thereto, neither as relates to the type of vehicle, nor to the number of the axles involved or provided. For instance, a two-axle vehicle may be contemplated, wherein a single, either Diesel or electric, prime motor is preferable, each hydraulic motor being then connected to its related differential gear through a conventional driveshaft set up in a similar manner to conventional road vehicle shafts.

## Claims

1. A power drive system for a road vehicle comprising wheel drive motors in the form of hydraulic motors (10, 11), having a prime motor (1) utilising an energy source, a first hydraulic pump (2) driven by said one prime motor (1) to convert the energy thereof into first pressure fluid energy, another prime motor (3) utilising an energy source, a second hydraulic pump (4) driven by said another motor (3) to convert the energy thereof into second pressure fluid energy, a controllable distributor valve unit (7) adapted for controlling said hydraulic motors (10, 11), first circuit means (5) hydraulically connecting said first hydraulic pump (2) to said valve unit (7), second circuit means (6), hydraulically connecting said second hydraulic pump (4) to said valve unit (7) and at least a third circuit means (8, 9) hydraulically connecting said valve unit (7) with said hydraulic motors (10, 11) thereby to convey selectively said first and second pressure fluid energy from said valve unit (7) to said hydraulic motors (10, 11) and from said hydraulic motors to the driven wheels (14, 15), characterized in that the prime motors (1, 3) utilise different type of energy source, and in that said controllable distributor valve unit (7) comprises a first electric control device (7a) for detecting the vehicle travel condition parameters and for generating signals responsive to the detected road travel conditions, solenoid valves (7b) arranged along said first (5), second (6) and third (8, 9) circuit means and provided with a plurality of operative positions to control the flow rates therethrough, and a second electric control device (7c) controlled via leads (25) by controls located at the driver's compartment and receiving and processing said signals from said first electric control device (7a) to control the position of said solenoid valves (7b).

2. A system according to claim 1, wherein said controllable distributor valve unit (7) includes a change over device preventing simultaneous actuation of said prime motors (1) and (3).

3. A system according to claim 1 or 2, wherein said hydraulic pumps (2, 4) are of the variable volume type.

4. A system according to any of claims 1—3, wherein said one prime motor (1) is an internal combustion engine and said another prime motor (3) is an electric motor.

5. A power drive system according to any of the preceding Claims, characterized in that said vehicle is a semitrailer vehicle having a rear body portion structure with at least one driving wheel axle shaft assembly (16) and at least one front body portion structure articulated to said rear body portion structure and having at least a second driving wheel axle shaft assembly (17) and including a fifth wheel mechanism (22) providing articulation between said rear body and said front body portion structure, and that said internal combustion engine (1) and said electric motor (3) are mounted at a distance from one another on said rear body portion structure and both said first and second driving wheel axle shaft assemblies (16, 17) include one said hydraulic motor (10, 11) and one said differential gear (12, 13) transmissively connected therewith.

6. A power drive system according to any of the preceding claims, when used for public transportation vehicles.

## Patentansprüche

1. Kraftantriebssystem für ein Strassenfabrzeug mit Radantriebsmotoren in Form von Hydraulikmotoren (10, 11), bestehend aus einem eine Energiequelle benützenden Antriebsmotor (1), einer ersten Hydraulikpumpe (2), die vom Antriebsmotor (1) angetrieben wird, um dessen Energie in eine erste Druckflüssigkeitsenergie umzuwandeln, einen weiteren, eine Energiequelle benützenden Antriebsmotor (3), eine zweite Hydraulikpumpe (4), die vom genannten weiteren Motor (3) angetrieben wird, um dessen Energie in eine zweite Druckflüssigkeitsenergie umzuwandeln, einer steuerbaren Verteilerventilgruppe (7) zur Steuerung der Hydraulikmotoren (10, 11), einem ersten Leitungskreis (5), welcher die erste Kydraulikpumpe (2) mit der Ventilgruppe (7) hydraulisch verbindet, einem zweiten Leitungskreis (6), welcher die zweite Hydraulikpumpe (4) mit der Ventilgruppe (7) hydraulisch verbindet, und wenigstens einem dritten Leitungskreis (8, 9), welcher die Ventilgruppe (7) mit den Hydraulikmotoren (10, 11) verbindet, um dadurch selektiv die erste und zweite Druckflüssigkeitsenergie von der Ventilgruppe (7) zu den Hydraulikmotoren (10, 11) und von den Hydraulikmotoren aus zu den Antriebsrädern (14, 15) zu leiten, dadurch gekennzeichnet, dass die Antriebsmotoren (1, 3) unterschiedliche Arten von Energiequellen benützen und dass die steuerbare Verteilerventilgruppe (7) aus einer ersten elektrischen Steuerungsvorrichtung (7a) zur Ermittlung der Parameter der Fahrbedingungen des Fahrzeuges und zur Erzeugung von auf die ermittelten Strassenfahrbedingungen ansprechenden Signalen, aus Magnetventilen (7b), die entlang der ersten (5), zweiten (6) und dritten (8, 9) Leitungskreise angeordnet sind und eine Vielzahl von Arbeitspositionen aufweisen, um die Durchflussgeschwindigkeiten zu regeln, und aus einer zweiten elektrischen Steuerungsvorrichtung (7c), die über Leitungen (25) durch Steuerungen im Fahrerabteil gesteuert werden und die genannten Signale von der ersten elektrischen Steuerungsvorrichtung (7a) verarbeiten, um die Position der Magnetventile (7b) zu steuern, besteht.

2. Kraftantriebssystem nach Anspruch 1, dadurch gekennzeichnet, dass die steuerbare Verteilerventilgruppe (7) eine Umsteuerungsvorrichtung aufweist, welche eine gleichzeitige Betätigung der Antriebsmotoren (1) und (3) verhindert.

3. Kraftantriebssystem nach Anspruch 1 oder 2, dadurch gekennzeichnet, dass die Hydraulikpumpen (2, 4) Pumpen mit veränderlichem Volumen sind.

4. Kraftantriebssystem nach einem der Ansprüche 1 bis 3, dadurch gekennzeichnet, dass der erste Antriebsmotor (1) eine Verbrennungskraftmaschine und der andere Antriebsmotor (3) ein Elektromotor ist.

5. Kraftantriebssystem nach einem der vorhergehenden Ansprüche, dadurch gekennzeichnet, dass das Fahrzeug ein Sattelschlepper-Fahrzeug ist, welches einen hinteren Konstruktionsteil mit wenigstens einer Antriebsrad-Achswellenanordnung (16) und wenigstens einen vorderen Kontruktionsteil aufweist, der an den hinteren Konstruktionsteil angelenkt ist und wenigstens eine zweite Antriebsrad-Achswellenanordnung (17) besitzt und einen "Fünftes Rad"-Mechanismus (22) zur gelenkigen Verbindung des hinteren Konstruktionsteiles mit dem vorderen Konstruktionsteil aufweist, und dass die Verbrennungskraftmaschine (1) und der Elektromotor (3) im Abstand zueinander auf dem hinteren Konstruktionsteil montiert sind und sowohl der ersten als auch der zweiten Antriebsrad-Achswellenanordnung (16, 17) einer der genannten Hydraulikmotoren (10, 11) und eines der Differentialgetriebe (12, 13) Kraftschlüssig zugeordnet sind.

6. Kraftantriebssystem nach einem der vorhergehenden Ansprüche bei Verwendung in öffentlichen Transportfahrzeugen.

**Revendications**

1. Système de transmission pour un véhicule routier, comprenant des moteurs d'entraînement des roues sous la forme de moteurs hydrauliques (10, 11), ayant un premier moteur primaire (1) utilisant une source d'énergie, une première pompe hydraulique (2) entraînée par ce moteur principal (1) pour transformer son énergie en une première énergie de fluide sous pression, un second moteur primaire (3) utilisant une source d'énergie, et une deuxième pompe hydraulique (4) entraînée par ce second moteur (3) pour transformer son énergie en une deuxième énergie de fluide sous pression, un distributeur pouvant être commandé (7), adapté pour commander les moteurs hydrauliques (10, 11), un premier circuit (5) raccordant hydrauliquement la première pompe hydraulique (2) à ce distributeur (7), un deuxième circuit (6) raccordant hydrauliquement la deuxième pompe hydraulique (4) à ce distributeur (7) et au moins un troisième circuit (8, 9) raccordant hydrauliquement ce distributeur (7) aux moteurs hydrauliques (10, 11) de façon à transporter sélectivement la première et la deuxième énergie de fluide sous pression en provenance du distributeur (7) à ces moteurs hydrauliques (10, 11) et de ceux-ci aux roues motrices (14, 15), caractérisé en ce que les moteurs primaires (1, 3) utilisent un type différent de source d'énergie et en ce que le distributeur commandable (7) comporte un premier dispositif de commande électrique (7a) destiné à détecter les paramètres de conditions de trajet du véhicule et à émettre des signaux sensibles aux conditions du trajet routier détectées, des électrovannes (7b) disposées le long du premier (5), du deuxième (6) et du troisième (8, 9) circuit et comportant une multiplicité de positions fonctionnelles pour commander les débits les traversant, et un deuxième dispositif de commande électrique (7c) commandé par l'intermédiaire de conducteurs (25) par des commandes disposées dans la cabine du conducteur et recevant et traitant les signaux en provenance du premier dispositif de commande électrique (7a) pour commander la position des électrovannes (7b).

2. Système selon la revendication 1, dans lequel le distributeur commandable (7) comporte un dispositif de commutation empêchant l'actionnement simultané des moteurs principaux 1 et 3.

3. Système selon la revendication 1 ou la revendication 2, dans lequel les pompes hydrauliques (2, 4) sont des pompes à volume variable.

4. Système selon l'une quelconque des revendications 1 à 3, dans lequel le premier moteur primaire (1) est un moteur à combustion interne et le second moteur primaire (3) est un moteur électrique.

5. Système de transmission de puissance selon l'une quelconque des revendications précédentes, caractérisé en ce que ce véhicule est un véhicule à semi-remorque ayant une structure de portion de carrosserie arrière et au moins un ensemble d'essieux moteurs (16) et au moins une structure de portion de carrosserie avant articulée sur cette structure de portion de carrosserie arrière et ayant au moins un deuxième ensemble d'essieux moteurs (17) et comportant une sellette d'accouplement (22) permettant l'articulation entre la structure de portion de carrosserie arrière et la structure de portion de carrosserie avant, et en ce que le moteur à combustion interne (1) et le moteur électrique (3) sont montés à une certaine distance l'un de l'autre sur la structure de portion de carrosserie arrière et que les deux ensembles d'essieux moteurs (16, 17) comportent un moteur hydraulique (10, 11) et un différentiel (12, 13) raccordés à cet essieu à des fins de transmission.

6. Système de transmission de puissance selon l'une quelconque des revendications précédentes, utilisé sur des véhicules de transport public.

Fig.1

Fig.2

0 028 769

Fig.3